# EUROPÄISCHE PATENTSCHRIFT

(11) **EP 0 525 823 B1**
(45) Veröffentlichungstag und Bekanntmachung des Hinweises auf die Patenterteilung: **15.02.1995**
(21) Anmeldenummer: 92115015.7
(22) Anmeldetag: 16.09.1988
(51) Int. Cl.: H01S 3/0975, H01S 3/03, H01S 3/0971

(54) **Entladungskanal für quergeströmte Hochleistungslaser**
Dicharge channel for transverse flow high power laser
Canal de décharge pour laser à haute puissance à écoulement transversal

(30) Priorität: 24.09.1987 DE 3732135
(43) Veröffentlichungstag der Anmeldung: 03.02.1993
(62) Teilanmeldung aus: 88115177.3
(73) Patentinhaber: DEUTSCHE FORSCHUNGSANSTALT FÜR LUFT- UND RAUMFAHRT e.V., 53111 Bonn (DE)
(72) Erfinder: Giesen, Adolf, Dr. rer. nat., W-7253 Renningen 1 (DE); Schock, Wolfram, Dr. Ing., W-7030 Böblingen (DE); Gehringer, Erwin, W-7030 Böblingen 4 (DE); Moritz, Peter C., W-7000 Stuttgart 80 (DE)
(74) Vertreter: Hoeger, Stellrecht & Partner

(56) Entgegenhaltungen:
- EP-A- 0 067 454
- EP-A- 0 108 300
- WO-A-87/03146
- FR-A- 2 513 027
- US-A- 3 748 594

## Beschreibung

Die Erfindung betrifft einen Entladungskanal für quergeströmte Hochleistungslaser, insbesondere für hochfrequenzangeregte Hochleistungslaser, mit einer dielektrischen Kanalwand und mit mindestens zwei einander gegenüberliegenden Elektrodenanordnungen, zwischen denen ein von einem Lasergasstrom durchsetzter Entladungsraum liegt und von denen mindestens eine einen an einer Innenseite der Kanalwand gehaltenen Metallkern sowie einen diesen übergreifenden und gegenüber dem Entladungsraum abschirmenden dielektrischen Abdeckkörper aufweist.

Ein derartiger Entladungskanal ist beispielsweise aus der US-PS 3 748 594 bekannt.

Bei einem derartigen Laser, bei welchem das Lasergas mit Unterschallgeschwindigkeit quer zur Längsrichtung der Elektrodenanordnungen strömt besteht das Problem, daß bei der zwischen den Elektrodenanordnungen auftretenden Gasentladung eine Erwärmung des Lasergases auftritt, so daß sich stromabwärts über den Bereich zwischen den Elektrodenanordnungen, in welchem die Gasentladung stattfindet, die Dichte des Lasergases ändert, was dazu führt, daß sich die Entladungsstromdichte bei der Gasentladung im stromabwärts liegenden Bereich der Elektrodenanordnung konzentriert und folglich eine ungleichmäßige Gasentladung vorliegt. Dies ist bei derartigen Lasern unerwünscht, da der gesamte Bereich der Gasentladung zwischen den Elektrodenanordnungen von einem Resonatorstrahlengang durchsetzt ist, um eine möglichst große Laserleistung zu erreichen.

Der Erfindung liegt daher die Aufgabe zugrunde, einen Entladungskanal der gattungsgemäßen Art derart zu verbessern, daß eine möglichst gleichmäßige Entladung im Bereich zwischen den Elektrodenanordnungen erfolgt.

Diese Aufgabe wird erfindungsgemäß dadurch gelöst, daß der Metallkern und der Abdeckkörper so ausgebildet sind, daß zwischen den Elektrodenanordungen eine in stromabwärts des Lasergasstroms weisender Richtung abnehmende und zu einer konstanten Entladungsstromdichte längs des Lasergasstroms führende Feldstärke herrscht.

Durch die besondere Ausbildung des auf einer Innenseite der Kanalwand angeordneten und somit hinsichtlich seiner Form frei variablen Metallkerns sowie auch des in seiner Form unabhängig von der Gestaltung der Kanalwand frei variablen Abdeckkörpers ist es möglich, den Metallkern und den Abdeckkörper so zu gestalten, daß die Feldstärke zwischen den Elektrodenanordnungen stromabwärts so abnimmt, daß über den gesamten Bereich zwischen den Elektrodenanordnungen in Richtung des strömenden Lasergases eine konstante Entladungsstromdichte vorliegt und somit in dem Bereich zwischen den Elektrodenanordnungen eine für eine möglichst vollständige Ausnutzung dieses Raums zur Lasertätigkeit erwünschte gleichmäßige Gasentladung stattfindet.

Eine Möglichkeit zur Verringerung der Feldstärke in stromabwärts weisender Richtung sieht vor, daß der Metallkern in seinem stromabwärts des Lasergasstroms liegenden Bereich einen abgerundeten Querschnitt aufweist.

Eine weitere Möglichkeit zur Verringerung der Feldstärke sieht vor, daß der Abdeckkörper in stromabwärts des Lasergasstroms weisender Richtung eine zunehmende Dichte aufweist, so daß die Feldstärke durch die zunehmende Dicke des Dielektrikums ebenfalls herabgesetzt wird.

Eine weitere Möglichkeit zur Verringerung der Feldstärke ist dann gegeben, wenn der Abdeckkörper stromabwärts liegende und dem Entladungsraum zugewandte Oberflächen des Metallkerns vollständig umgreift.

Im letzteren Fall hat es sich als besonders vorteilhaft erwiesen, wenn der Abdeckkörper sich bis zur Kanalwand erstreckt.

Da der Metallkern und der Abdeckkörper an der Innenseite der Kanalwand angeordnet sind und somit innerhalb des Entladungsraums liegen, besteht das Problem, daß Zwischenräume zwischen den einander zugewandten Flächen des Metallkerns und des Abdeckkörpers entstehen können, in welchen ebenfalls Lasergas vorhanden ist und daß in diesen Zwischenräumen parasitäre Entladungen auftreten, welche unerwünscht sind. Aus diesem Grund ist es von Vorteil, wenn Zwischenräume zwischen einander zugewandten Flächen des Metallkerns und des Abdeckkörpers mit einer Verbindungsmasse ausgefüllt sind.

Da der Abdeckkörper und der Metallkern bei der vorliegenden Erfindung auch in verstärktem Maße den in dem Entladungsraum herrschenden Temperaturen ausgesetzt sind, die in der Grenzschicht zwischen Plasma und Elektroden, in welcherein Großteil der Verlustwärme entsteht, vorliegen, können die unterschiedlichen Wärmeausdehnungskoeffizienten des Metallkerns und des Abdeckkörpers zu einem Brechen der Verbindungsmasse führen und somit wiederum kleine Zwischenräume zwischen diesen auftreten lassen. Aus diesem Grund ist es besonders vorteilhaft, wenn die Verbindungsmasse elastisch oder plastisch verformbar ist, so daß diese Probleme vermieden werden können.

Die Verbindungsmasse zwischen dem Metallkern und dem Abdeckkörper wird bei Hochfrequenzanregung von elektrischen Feldern durchsetzt, so daß es günstig ist, wenn die Verbindungsmasse bei Hochfrequenz kleine dielektrische Verluste aufweist.

Der Abdeckkörper wird, da er unmittelbar an die eigentliche Gasentladung angrenzt, sehr stark erhitzt, so daß es erwünscht ist, wenn die Wärme über dem Metallkörper abgeführt werden kann. Aus diesem Grund ist es vorteilhaft, wenn die Verbindungsmasse eine gute Wärmeleitfähigkeit aufweist.

Ein besonders vorteilhaftes Ausführungsbeispiel sieht vor, daß die Verbindungsmasse metallgefüllt ist, wodurch sowohl kleine dielektrische Verluste als auch eine gute Wärmeleitfähigkeit problemlos erreichbar sind.

Bei den bisher beschriebenen Ausführungsbeispielen wurde nicht festgelegt, wie der Abdeckkörper an dem Metallkern gehalten ist. So wäre es z.B. denkbar, den Abdeckkörper durch Formschluß an dem Metallkern zu halten. Besonders einfach herzustellen ist jedoch eine Elektrodenanordnung, bei welcher der Abdeckkörper mittels der Verbindungsmasse an dem Metallkern gehalten ist, so daß die erfindungsgemäße Verbindungsmasse gleichzeitig als Klebemasse dient und das Herstellen einer formschlüssigen Verbindung unnötig ist.

Insbesondere dann, wenn die Verbindungsmasse als Klebemasse dient, ist es vorteilhaft, wenn diese einen Silikonkleber umfaßt. Alternativ dazu ist es ebenfalls vorteilhaft, wenn die Verbindungsmasse einen Epoxidharzkleber umfaßt. Beide Klebearten sind ausreichend elastisch oder plastisch und erlauben die Herstellung einer dauerhaften und festen Verbindung zwischen dem Metallkern und dem Abdeckkörper.

Bei den vorstehend beschriebenen Ausführungsbeispielen besteht noch die Möglichkeit, daß der Metallkern nicht vollständig von dem Abdeckkörper umschlossen ist. Aus diesem Grund ist vorgesehen, daß der Metallkern auf seinen nicht von dem Metallkörper übergriffenen Oberflächen mit einer Vergußmasse ummantelt ist, um weitere parasitäre Entladungen zu verhindern.

Bei dieser Vergußmasse hat es sich als vorteilhaft erwiesen, wenn diese Silikon umfaßt.

Wie bereits angedeutet, wird der Abdeckkörper dadurch, daß er unmittelbar an die Gasentladung engrenzt, sehr stark erhitzt, so daß eine gute Wärmeleitung zum Metallkern erforderlich ist. Da dieser jedoch bei der erfindungsgemäßen Lösung an der Innenseite der Kanalwand angeordnet ist, stellt sich auch hier das Problem der Wärmeabfuhr. Aus diesem Grund hat es sich als vorteilhaft erwiesen, wenn der Metallkern mit Kühlkanälen versehen ist.

Eine besonders effektive Kühlung ist dann möglich, wenn sich die Kühlkanäle in Längsrichtung des Metallkerns erstrecken. Zusätzlich kann die Kühlung noch weiter dadurch verbessert werden, daß die Kühlkanäle an Stirnseiten des Metallkerns durch Querkanäle zu Mäandern verbunden sind.

Zur Halterung des Metallkerns hat es sich als vorteilhaft erwiesen, wenn dieser mit die Kanalwand durchdringenden Stegen versehen ist, welche sich zweckmäßigerweise dann ihrerseits an der Kanalwand abstützen.

Sofern der Metallkern mit Kühlkanälen versehen ist, hat es sich als zweckmäßig erwiesen, diese Kühlkanäle durch Kühlmittelbohrungen in den Stegen mit Kühlmittel zu versorgen.

Ferner dienen die Stege dazu, eine elektrisch leitende Verbindung zwischen dem Metallkern und der Hochfrequenzzuführung herzustellen.

Insbesondere um eine symmetrische Hochfrequenzankopplung zu ermöglichen ist es vorteilhaft, wenn die Stege ungefähr in der Längsmitte des Metallkerns angeordnet sind.

Bei sämtlichen vorstehend beschriebenen Ausführungsbeispielen werden unter Hochfrequenz Frequenzen verstanden, welche im Bereich von 100 kHz bis 500 MHz liegen, und bei dem Lasergas handelt es sich insbesondere um übliche Lasergasgemische für CO₂ und CO-Laser mit Unterschallströmung.

Weitere Merkmale und Vorteile der Erfindung sind Gegenstand der nachfolgenden Beschreibung sowie der zeichnerischen Darstellung einiger Ausführungsbeispiele. In der Zeichnung zeigen:
- Figur 1: eine geschnittene perspektivische Darstellung eines Entladungskanals eines erfindungsgemäßen Lasers;
- Figur 2: eine Draufsicht in Richtung des Pfeils A einer ersten Variante einer Elektrodenanordnung;
- Figur 3: ein teilweise aufgebrochenes Endstück eines Metallkerns in Figur 2;
- Figur 4: eine Draufsicht ähnlich der Figur 2 einer zweiten Variante;
- Figur 5: eine Draufsicht ähnlich der Figur 2 einer dritten Variante
- Figur 6: eine Draufsicht ähnlich der Figur 2 einer vierten Variante und
- Fig. 7: eine teilweise aufgebrochene Draufsicht auf ein weiteres Ausführungsbeispiel eines Metallkerns.

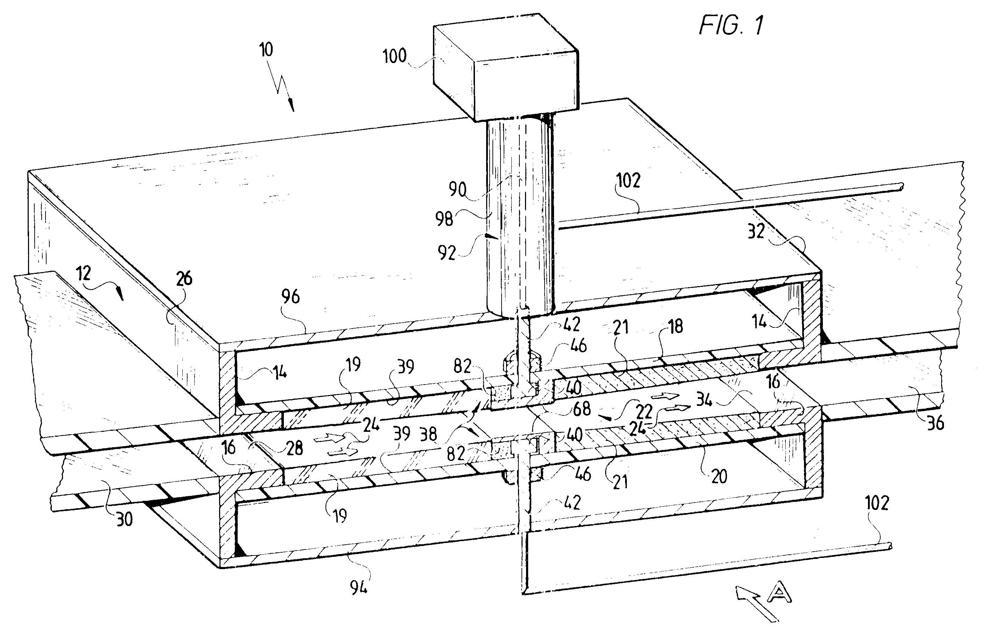

Ein in Figur 1 dargestelltes Ausführungsbeispiel des erfindungsgemäßen Lasers umfaßt ein als Ganzes mit 10 bezeichnetes Gehäuse, mit einem Tragrahmen 12, welcher auf einer Innenseite 14 mit einem Wulst 16 versehen ist, auf welchem eine von einer oberen offenen Seite des Tragrahmens 12 eingesetzte Kanalwand 18 und eine von einer unteren offenen Seite des Tragrahmens 12 eingesetzte Kanalwand 20 aufliegen, welche durch den Wulst 16 im wesentlichen parallel und im Abstand voneinander gehalten sind. Ein als Ganzes mit 22 bezeichneter Entladungsraum ist durch die Kanalwände 18 und 20 von oben und unten sowie seitlich durch den Wulst 16 begrenzt.

Der Entladungsraum 22 wird von einem durch die Pfeile 24 dargestellten Lasergasstrom durchsetzt, welcher durch einen ein Vorderteil 26 des Tragrahmens 12 ungefähr mittig des Wulstes 16 durchdringenden Einströmschlitz 28 in den Entladungsraum 22 eintritt und dem Einströmschlitz 28 über einen mit diesem verbundenen Einströmkanal 30 zugeführt wird. Den Entladungsraum 22 verläßt der Lasergasstrom 24 über ein ungefähr mittig des Wulstes 16 in einem Hinterteil 32 des Rahmens 12 angeordneten Ausströmschlitz 34, an welchem sich ein Ausströmkanal 36 anschließt. Der Einströmkanal 30 und Ausströmkanal 36 sind Teil eines geschlossenen Lasergasumwälzsystems zur Kühlung des Lasergases vor einer erneuten Zufuhr durch den Einströmschlitz 28.

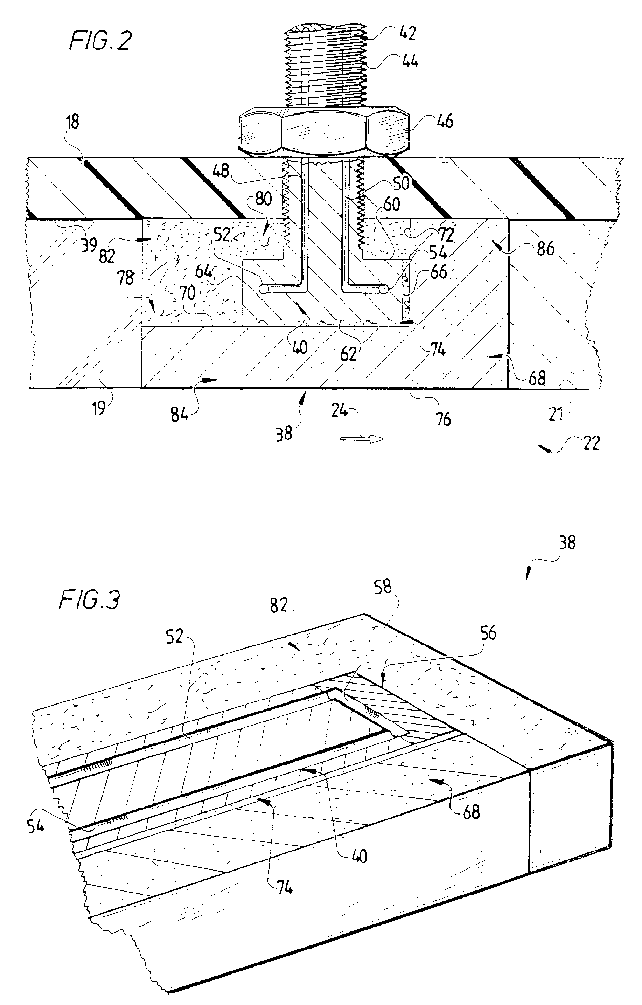

In dem Entladungsraum 22 sind ungefähr mittig der Kanalwände 18 und 20 und quer zum Lasergasstrom 24 sich im wesentlichen über eine gesamte Breite des Entladungsraums 22 quer zum Lasergasstrom 24 erstreckende Elektrodenanordnungen 38 jeweils an einer Innenseite 39 der Kanalwand 18 bzw. 20 gehalten, deren Aufbau in Form von verschiedenen Varianten in den Fig. 2 bis 6 dargestellt ist.

Diese Elektrodenanordnungen 38 sind zweckmäßigerweise in ihrer Längsrichtung in einzelne Segmente unterteilt. Zur Erreichung möglichst guter Strömungsverhältnisse im Entladungsraum 22 sind stromaufwärts der Elektrodenanordnungen Glasplatten 19 vorgesehen, welche vom Einströmschlitz 28 bis zur Elektrodenanordnung 38 reichen, sowie stromabwärts der Elektrodenanordnungen 38 von diesen bis zum Ausströmschlitz 34 reichende Keramikplatten 21. Die Glasplatten 19 und die Keramikplatten 21 sind dabei so angeordnet, daß sie vom Einströmschlitz 28 bis zum Ausströmschlitz 34 ein dem Lasergasstrom zu zugewandte, durchgehende und möglichst stufenfreie Fläche bilden, in welche die Elektrodenanordnung 38 integriert ist. Somit wird eine Wirbelbildung im Lasergasstrom 24 weitgehend vermieden.

Die in Figur 2 darstellte Elektrodenanordnung 38 umfaßt einen sich quer zum Lasergasstrom 24 und parallel zu der Innenseite 39 beispielsweise der Kanalwand 18 in Form einer rechteckförmigen Leiste erstreckenden Metallkern 40, welcher durch einen ungefähr senkrecht von diesem in Richtung der Kanalwand 18 abstehenden und diese durchdringenden Steg 42 an der Kanalwand 18 gehalten ist, wobei dieser Steg zum Beispiel kreiszylindrisch ausgebildet und mit einem Aussengewinde 44 versehen ist, auf welches eine Mutter 46 aufschraubbar ist, über welche sich der Steg 42 dann auf der Kanalwand 18 abstützt.

In Längsrichtung dieses Stegs 42 verlaufen parallel zueinander zwei Kühlmittelbohrungen 48 und 50, welche im Metallkern 40 in zwei parallel zueinander und in Längsrichtung der Metallkerns verlaufende Kühlkanäle 52 bzw. 54 einmünden. Diese Kühlkanäle 52 und 54 erstrecken sich längs des gesamten Metallkerns 40 und sind durch einen in einem den Metallkern 4O stirnseitig abschliessenden Endstück 56 angeordneten Querkanal 58 miteinander verbunden, so daß die Kühlkanäle 52 und 54 mit dem Querkanal 58 in dem Metallkern 40 eine Mäanderschleife bilden. Es ist ausserdem möglich, daß mehrere ebenfalls durch entsprechende Querkanäle verbundene Mäanderschleifen vorgesehen sind.

Der einen rechteckigen Querschnitt aufweisende Metallkern 40 ist so ausgerichtet, daß er mit seinen Breitseiten 60 und 62 parallel zu der Innenseite 39 der Kanalwand 18 ausgerichtet ist, wobei zwischen der der Kanalwand 18 zugewandten Breitseite 6O und der Innenseite 39 derselben ein Abstand verbleibt.

Die sich zwischen diesen Breitseiten 6O und 62 erstreckenden Schmalseiten 64 und 66 verlaufen dabei im wesentlichen senkrecht zu den Breitseiten 62. Auf der der Kanalwand 18 abgewandten Breitseite 62 und auf der stromabwärts des Lasergasstroms 24 liegenden Schmalseite 66 liegt ein winkelartig ausgebildeter und sich beiderseits über die Breitseite 62 hinaus erstreckender Abdeckkörper 68 mit seinen senkrecht aufeinanderstehenden Auflageflächen 7O und 72 an, wobei zwischen der Breitseite 62 des Metallkerns 4O und der Auflagefläche 7O des Abdeckkörpers 68 sowie der Schmalseite 66 des Metallkerns 4O und der Auflagefläche 72 des Abdeckkörpers 68 eine metallgefüllte Verbindungsmasse 74 vorgesehen ist, welche den gesamten Abdeckkörper 68 an dem Metallkern 4O hält. Bei dieser metallgefüllten Verbindungsmasse 74 handelt es sich entweder um eine elastische Silikonklebemasse oder um eine elastische Epoxydharzklebemasse.

Der Abdeckkörper 68 ist aus einem dielektrischen Material hergestellt, wobei zu berücksichtigen ist, daß dieser mit seiner der Auflagefläche 7O gegenüberliegenden Oberfläche 76 an eine eigentliche Entladungszone im Entladungsraum 22 angrenzt und daher hohen Temperaturen ausgesetzt ist, so daß als Material für diesen Abdeckkörper lediglich hitzebeständige Materialien, wie z.B. Teflon®, Quarzglas, oder noch zusätzlich gut wärmeleitende Materialien, wie z.B. Keramik, insbesondere Al₂O₃ oder Silikatkeramik, als im Rahmen der Erfindung bevorzugte Materialien in Frage kommen.

Da von dem Abdeckkörper 68 somit lediglich die Breitseite 62 und die Schmalseite 66 abgedeckt sind, ist es, um parasitäre Entladungen zu vermeiden, erforderlich, auch zusätzlich noch die Breitseite 60 und die Schmalseite 64 des Metallkerns 40 sowie dessen Endstück 56 abzudecken. Aus diesem Grund sind der sich zwischen dem über den Metallkern 40 stromaufwärts überstehenden Abdeckkörper 68 und der Innenseite 39 der Kanalwand 18 bildende Zwischenraum 78 sowie der sich zwischen der Breitseite 60 des Metallkerns 40 und der Innenseite 39 der Kanalwand 18 bildende Zwischenraum 80 mit einer Vergußmasse 82 ausgefüllt, welche vorzugsweise eine Silikonmasse ist. Diese Lösung hat den zusätzlichen Vorteil, daß der Metallkern 4O nicht unmittelbar auf der Kanalwand 18 aufliegt.

Durch die Tatsache, daß der Abdeckkörper 68 winkelförmig ausgebildet ist und einen sich parallel zur Breitseite 62 erstreckenden Schenkel 84 sowie einen sich senkrecht vom Schenkel 84 bis zur Innenseite 39 der Kanalwand 18 parallel zur Schmalseite 66 erstreckenden Schenkel 86 umfaßt, wird erreicht, daß die Feldstärke eines sich ausgehend vom Metallkern 40 bildenden elektrischen Feldes zwischen der in Figur 2 dargestellten Elektrodenanordnung 38 und einer dieser gegenüberliegenden entsprechenden Elektrodenanordnung 38 stromabwärts des Lasergasstroms 24 hin abnimmt, so daß in einer stromabwärts des Lasergasstroms 24 weisenden Richtung die Entladungsstromdichte aufgrund einer Verringerung der Gasdichte nicht zunimmt, sondern längs des Lasergasstroms 24 konstant bleibt.

Somit ist bei der Elektrodenanordnung gemäß Figur 2 der über die Innenseite der Kanalwand 18 überstehende Metallkern 40 vollständig von dielektrischem Material umgeben,so daß keine parasitären Entladungen auftreten können, wobei allerdings die Vergußmasse 82 in der Regel einen hohen Verlustwinkel aufweist und daher kein gutes Dielektrikum darstellt, während der Abdeckkörper 68, der im wesentlichen von dem gesamten, von dem Metallkern 40 ausgehenden Feld durchsetzt ist, ein gutes Dielektrium ist.

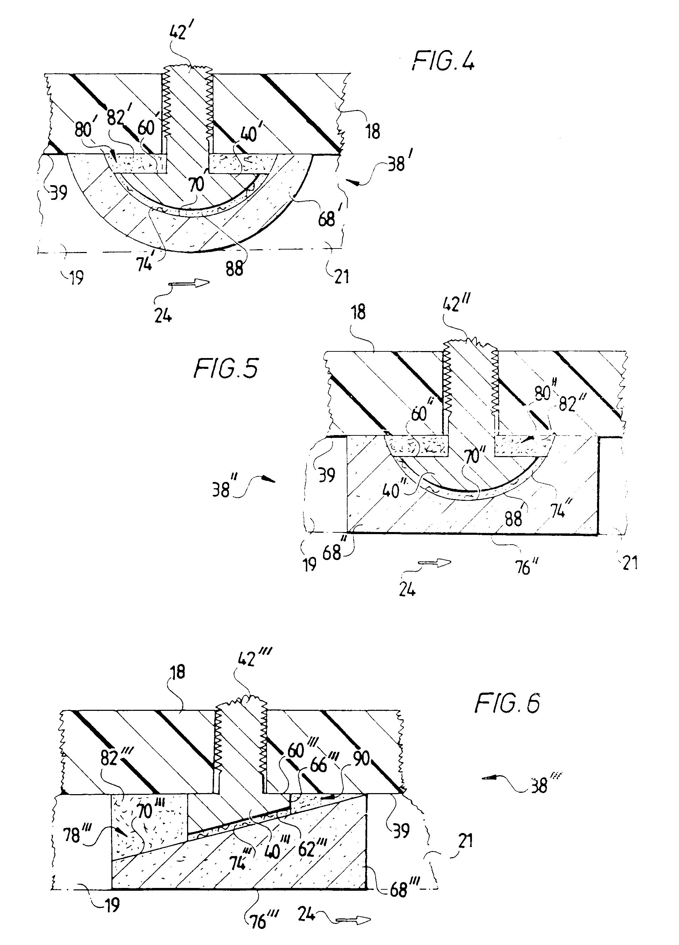

Eine zweite Variante einer erfindungsgemäßen Elektrodenanordnung 38′ ist in Figur 4 dargestellt, bei dieser ist der Metallkern 40′ nicht als Leiste mit einem rechteckigem Querschnitt ausgebildet, sondern ausgehend von der der Innenseite 39 der Kanalwand 18 zugewandten Breitseite 60′ zum Entladungsraum 22 hin mit einer gerundeten Vorderseite 88 versehen. Auf dieser gerundeten Vorderseite 88 liegt der Abdeckkörper 68′ mit seiner entsprechend der Vorderseite 88 gerundeten Auflagefläche 70′ an und ist zusätzlich über den Metallkern 40′ hinaus bis zur Innenseite 39 der Kanalwand 18 heruntergezogen, so daß er an dieser ebenfalls anliegt.

Der Zwischenraum zwischen dem Abdeckkörper 68′ und der Vorderseite 88 des Metallkerns 40 ist ebenfalls mit einer metallgefüllten Verbindungsmasse 74′ ausgefüllt, so daß der Abdeckkörper 68′ ebenfalls durch die Verbindungsmasse 74′ an dem Metallkern 40′ gehalten ist. Ferner ist der Zwischenraum 80′ zwischen der Breitseite 60′ und der Innenseite 39 der Kanalwand 18 mit der Vergußmasse 82′ ausgefüllt, um parasitäre Entladungen zu verhindern.

Aufgrund der abgerundeten Vorderseite 88 und des auf dieser aufliegenden Abdeckkörpers 68′ mit konstanter Dicke nimmt ausgehend von einem mittleren Bereich der Elektrodenanordnung 38′ die elektrische Feldstärke in stromabwärts weisender Richtung ab, so daß auch bei dieser Elektrodenanordnung 38′ durch die spezielle Krümmung der Vorderseite 88 eine konstante Entladungsstromdichte in stromabwärts weisender Richtung erreichbar ist.

Der Metallkern 40′ kann über den Steg 42′ in gleicher Weise wie bei der ersten in Figur 2 und 3 dargestellten Variante gekühlt werden, so daß auf eine gesonderte Beschreibung in Rahmen dieser Variante verzichtet wird.

Der Metallkern 40˝ einer dritten Variante, dargestellt in Figur 5, ist identisch ausgebildet, wie der Metallkern 40′ der zweiten Variante und ausserdem ist auch der Abdeckkörper 68˝ mit einer entsprechend der Vorderseite 88′ gekrümmten Auflagefläche 70˝ versehen, wobei zwischen der Auflagefläche 70˝ und der gekrümmten Vorderseite 88′ die metallgefüllte Verbindungsmasse 74˝ angeordnet ist, die den Abdeckkörper 68˝ an dem Metallkern 40˝ hält. Desgleichen ist auch der Zwischenraum 80˝ zwischen der Breitseite 60˝ und der Innenseite 39 mit Vergußmasse 82˝ gefüllt.

Der einzige Unterschied zur zweiten Variante zeigt sich in der Gestaltung der Oberfläche 76˝ des Abdeckkörpers 68˝. Bei der dritten Variante nimmt, ausgehend von einem mittleren Bereich der Elektrodenanordnung 38˝ in Richtung des Lasergasstroms 24,die Dicke des Abdeckkörpers 68˝ und somit auch die Dicke des Dielektrikums zu, was eine weitere Reduzierung der Feldstärke ausgehend von einem mittleren Bereich in stromabwärts weisender Richtung herbeiführt.

Die zweite und die dritte Variante, dargestellt in den Figuren 4 und 5 sind symmetrisch ausgebildet, so daß auch ausgehend von einem mittleren Bereich stromaufwärts eine Verringerung der elektrischen Feldstärke auftritt, die jedoch keinerlei Auswirkungen hat.

Bei der vierten Variante (Figur 6) der erfindungsgemäßen Elektrodenanordnung 38‴ hat der Metallkern 40‴ zwar ebenfalls noch einen viereckigen Querschnitt ähnlich der ersten Variante, allerdings verläuft die Breitseite 62 ‴ nicht parallel zur Breitseite 60‴, sondern ist gegenüber der letzteren um einen spitzen Winkel geneigt, so daß sich ein Abstand zwischen den Breitseiten 60‴ und 66‴ in stromabwärts weisender Richtung verringert. Ausgehend von parallel zueinander verlaufenden Innenseiten 39 der Kanalwände 18 und 2O nimmt bei dieser Elektrodenanordnung der Abstand einander gegenüberliegender Breitseiten 62‴ stromabwärts zu, so daß die Feldstärke zwischen diesen abnimmt.

Der auf dem Metallkern 40‴ aufsitzende Abdeckkörper 68‴ weist seinerseits eine parallel zur Breitseite 60‴ verlaufende Auflagefläche 70‴ auf sowie eine dem Entladungsraum 22 zugewandte Oberfläche 76‴, welche parallel zur Breitseite 60‴ verläuft. Dadurch wird der Abstand zwischen der Auflagefläche 70‴ und der Oberfläche 76‴ des Abdeckkörpers 68‴ in stromabwärts weisender Richtung grösser, so daß auch die Dicke des Dielektrikums in dieser Richtung zunimmt und dafür sorgt, daß dadurch in stromabwärts weisender Richtung die elektrische Feldstärke abnimmt.

Der Abdeckkörper 68‴ ist ebenfalls mit einer metallgefülltem Verbindungsmasse 74‴ auf die Breitseite 62‴ des Metallkörpers 40‴ aufgeklebt und dadurch an diesem gehalten.

Ausserdem erstreckt sich der Abdeckkörper 68‴ sowohl stromaufwärts als auch stromabwärts über den Metallkern 40‴ hinaus,so daß der Zwischenraum 78‴ zwischen dem stromaufwärts über dem Metallkern 40‴ überstehenden Teil des Abdeckkörpers 68˝ und der Innenseite 39 der Kanalwand 18 sowie ein zwischen dem stromabwärts über den Metallkern 40‴ überstehenden Teil des Abdeckkörpers 68˝ und der Innenseite 39 der Kanalwand 18 entstehender Zwischenraum 90 jeweils mit der Vergußmasse 82 ‴ aufgefüllt sind.

Bei der vierten Variante liegt der Metallkern 40‴ mit seiner Breitseite 60‴ unmittelbar an der Innenseite 39 der Kanalwand 18 an, so daß zwischen diesen kein mit Vergußmasse aufzufüllender Zwischenraum besteht.

Zur Kühlung des Metallkerns 40‴ können ähnlich der ersten Variante in diesem Kühlkanäle vorgesehen sein, wobei hierzu auf die erste Variante verwiesen wird.

Bei sämtlichen Elektrodenanordnungen 38 bis 38‴ ist im Rahmen des beschriebenen Ausführungsbeispiels vorgesehen, daß zur symmetrischen Hochfrequenzeinkopplung der Steg 42, 42′, 42˝ und 42‴ jeweils mittig der Elektrodenanordnung 38, d.h. mittig des Metallkerns 40, 40′, 40˝, 40‴ angeordnet ist.

Der Steg 42 der in Figur 1 dargestellten oberen Elektrodenanordnung 38 ist dabei direkt mit einem Innenleiter 9O einer koaxialen Hochfrequenzstromzuleitung 92 verbunden, während der Steg 42 der unteren Elektrodenanordnung 38 über eine parallel zur Kanalwand 2O im Abstand von dieser angeordnete metallische Abschirmung 94, über den metallischen Tragrahmen 12 und dann wiederum über eine parallel zur Kanalwand 18 und im Abstand von dieser verlaufende metallische Abschirmung 96 mit einem Außenleiter 98 der koaxialen Stromzuleitung 92 verbunden ist. In diese koaxiale Stromzuleitung 92 wird mittels eines Hochfrequenzgenerators 1OO die Hochfrequenz zur Hochfrequenzanregung eingespeist.

Zusätzlich sind aus den Stegen 42 Kühlleitungen 1O2 herausgeführt, welche einerseits mit einem zeichnerisch nicht dargestellten Kühlmitteleinspeisungssystem und andererseits mit der Kühlmittelbohrung 48 und 5O in den Stegen 42 in Verbindung stehen.

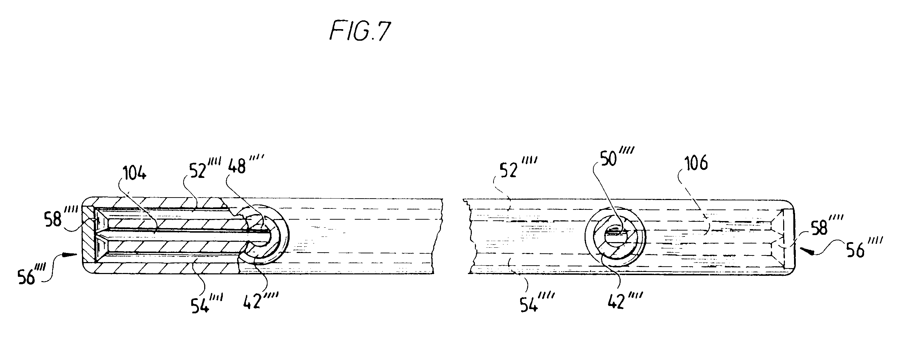

Bei einer weiteren Möglichkeit der Kühlung des Metallkerns 4O‴, dargestellt in Fig. 7, ist der Metallkern 4O‴ mit zwei im Abstand voneinander angeordneten Stegen 42‴ versehen. Durch diese Stege 42‴ ist jeweils eine Kühlmittelbohrung 48˝˝, 5O˝˝ zum Metallkern 4O˝˝ geführt, die in diesem jeweils einen zu einem Endstück 56˝˝ führenden Stichkanal 1O4 bzw. 1O6 münden. Diese Stichkanäle 1O4, 1O6 sind im Bereich der Endstücke 56˝˝ durch die Querkanäle 56˝˝ mit den sich längs des Metallkerns 4O˝˝ erstreckenden Kühlkanälen 52˝˝ und 54˝˝ zu Mäandern verbunden.

## Patentansprüche

1. Entladungskanal für quergeströmte Hochleistungslaser, insbesondere für hochfrequenzangeregte Hochleistungslaser, mit einer dielektrischen Kanalwand (18, 20) und mit mindestens zwei einander gegenüberliegenden Elektrodenanordnungen (38), zwischen denen ein von einem Lasergasstrom (24) durchsetzter Entladungsraum (22) liegt und von denen mindestens eine einen an einer Innenseite der Kanalwand gehaltenen Metallkern (40) sowie einen diesen übergreifenden und gegenüber dem Entladungsraum abschirmenden dielektrischen Abdeckkörper (68) aufweist, dadurch gekennzeichnet, daß der Metallkern (40) und der Abdeckkörper (68) so ausgebildet sind, daß zwischen den Elektrodenanordnungen (38) eine in stromabwärts des Lasergasstroms (24) weisender Richtung abnehmende und zu einer konstanten Entladungsstromdichte längs des Lasergasstroms (24) führende Feldstärke herrscht.

2. Entladungskanal nach Anspruch 1, dadurch gekennzeichnet, daß der Metallkern (40) in seinem stromabwärts des Lasergasstroms (24) liegenden Bereich einen abgerundeten Querschnitt aufweist.

3. Entladungskanal nach Anspruch 1 oder 2, dadurch gekennzeichnet, daß der Abdeckkörper (68) in stromabwärts des Lasergasstroms (24) weisender Richtung eine zunehmende Dicke aufweist.

4. Entladungskanal nach einem der voranstehenden Ansprüche, dadurch gekennzeichnet, daß der Abdeckkörper (68) stromabwärts liegende und dem Entladungsraum (22) zugewandte Oberflächen (62, 66, 68) des Metallkerns (40) vollständig umgreift.

5. Entladungskanal nach einem der Ansprüche 2 bis 4, dadurch gekennzeichnet, daß der Abdeckkörper (68) sich bis zur Kanalwand (18, 20) erstreckt.

6. Entladungskanal nach einem der voranstehenden Ansprüche, dadurch gekennzeichnet, daß Zwischenräume zwischen einander zugewandten Flächen (62, 66, 88; 70, 72) des Metallkerns (40) und des Abdeckkörpers (68) mit einer Verbindungsmasse (74) ausgefüllt sind.

7. Entladungskanal nach Anspruch 6, dadurch gekennzeichnet, daß die Verbindungsmasse (74) elastisch oder plastisch verformbar ist.

8. Entladungskanal nach Anspruch 6 oder 7, dadurch gekennzeichnet, daß die Verbindungsmasse (74) bei Hochfrequenz kleine dielektrische Verluste aufweist.

9. Entladungskanal nach einem der Ansprüche 6 bis 8, dadurch gekennzeichnet, daß die Verbindungsmasse (74) eine gute Wärmeleitfähigkeit aufweist.

10. Entladungskanal nach einem der Ansprüche 6 bis 9, dadurch gekennzeichnet, daß die Verbindungsmasse (74) an dem Metallkern (40) gehalten ist.

11. Entladungskanal nach einem der Ansprüche 6 bis 10, dadurch gekennzeichnet, daß der Abdeckkörper (68) mittels der Verbindungsmasse (74) an dem Metallkern (40) gehalten ist.

12. Entladungskanal nach Anspruch 11, dadurch gekennzeichnet, daß die Verbindungsmasse (74) einen Silikonkleber umfaßt.

13. Entladungskanal nach nach Anspruch 11, dadurch gekennzeichnet, daß die Verbindungsmasse (74) einen Epoxydharzkleber umfaßt.

14. Entladungskanal nach einem der voranstehenden Ansprüche, dadurch gekennzeichnet, daß der Metallkern (40) auf seinen nicht von dem Abdeckkörper (68) übergriffenen Oberflächen (60, 64) mit einer Vergußmasse (82) ummantelt ist.

15. Entladungskanal nach Anspruch 14, dadurch gekennzeichnet, daß die Vergußmasse (82) Silikon umfaßt.

16. Entladungskanal nach einem der voranstehenden Ansprüche, dadurch gekennzeichnet, daß der Metallkern (40) mit Kühlkanälen (50, 52) versehen ist.

17. Entladungskanal nach Anspruch 16, dadurch gekennzeichnet, daß sich die Kühlkanäle (50, 52) in Längsrichtung des Metallkerns (40) erstrecken.

18. Entladungskanal nach Anspruch 17, dadurch gekennzeichnet, daß die Kühlkanäle (50, 52) an Stirnseiten des Metallkerns (40) durch Querkanäle (58) zu Mäandern verbunden sind.

19. Entladungskanal nach einem der voranstehenden Ansprüche, dadurch gekennzeichnet, daß der Metallkern mit einem die Kanalwand durchdringenden Steg versehen ist.

20. Entladungskanal nach Anspruch 19, dadurch gekennzeichnet, daß der Steg (42) ungefähr in der Längsmitte des Metallkerns (40) angeordnet ist.

## Claims

1. Discharge channel for transverse flow, high power lasers, in particular for high-frequency excited, high power lasers, comprising a dielectric channel wall (18, 20) and at least two electrode arrangements (38) located opposite one another, a discharge chamber (22) penetrated by a flow (24) of laser gas being located between said arrangements and at least one of said arrangements having a metal core (40) held on an inner side of the channel wall as well as a dielectric cover member (68) engaging over the metal core and screening it from the discharge chamber, characterized in that the metal core (40) and the cover member (68) are designed such that a field strength decreasing in a direction pointing downstream of the flow (24) of laser gas and leading to a constant discharge current density along the flow (24) of laser gas prevails between the electrode arrangements (38).

2. Discharge channel as defined in claim 1, characterized in that the metal core (40) has a rounded cross section in its region lying downstream of the flow (24) of laser gas.

3. Discharge channel as defined in claim 1 or 2, characterized in that the cover member (68) has an increasing thickness in the direction pointing downstream of the flow (24) of laser gas.

4. Discharge channel as defined in any of the preceding claims, characterized in that the cover member (68) engages completely around surfaces (62, 66, 68) of the metal core (40) located downstream and facing the discharge chamber (22).

5. Discharge channel as defined in any of claims 2 to 4, characterized in that the cover member (68) extends as far as the channel wall (18, 20).

6. Discharge channel as defined in any of the preceding claims, characterized in that spaces between facing surfaces (62, 66, 88; 70, 72) of the metal core (40) and the cover member (68) are filled with a connecting mass (74).

7. Discharge channel as defined in claim 6, characterized in that the connecting mass (74) is elastically or plastically deformable.

8. Discharge channel as defined in claim 6 or 7, characterized in that the connecting mass (74) exhibits no dielectric losses at high frequency.

9. Discharge channel as defined in any of claims 6 to 8, characterized in that the connecting mass (74) has a good heat conductivity.

10. Discharge channel as defined in any of claims 6 to 9, characterized in that the connecting mass (74) is held on the metal core (40).

11. Discharge channel as defined in any of claims 6 to 10, characterized in that the cover member (68) is held on the metal core (40) by means of the connecting mass (74).

12. Discharge channel as defined in claim 11, characterized in that the connecting mass (74) comprises a silicone adhesive.

13. Discharge channel as defined in claim 11, characterized in that the connecting mass (74) comprises an epoxy resin adhesive.

14. Discharge channel as defined in any of the preceding claims, characterized in that the metal core (40) is covered by a sealing compound (82) on its surfaces (60, 64) not overlapped by the cover member (68).

15. Discharge channel as defined in claim 14, characterized in that the sealing compound (82) comprises silicone.

16. Discharge channel as defined in any of the preceding claims, characterized in that the metal core (40) is provided with cooling channels (50, 52).

17. Discharge channel as defined in claim 16, characterized in that the cooling channels (50, 52) extend in longitudinal direction of the metal core (40).

18. Discharge channel as defined in claim 17, characterized in that the cooling channels (50, 52) are connected at end faces of the metal core (40) by cross channels (58) to form meanders.

19. Discharge channel as defined in any of the preceding claims, characterized in that the metal core is provided with a web penetrating the channel wall.

20. Discharge channel as defined in claim 19, characterized in that the web (42) is arranged approximately in the longitudinal center of the metal core (40).

## Revendications

1. Canal de décharge pour laser haute puissance à écoulement transversal, en particulier pour laser haute puissance excité par haute fréquence, avec une paroi de canal diélectrique (18,20), et avec au moins deux systèmes d'électrodes (38) en regard l'un de l'autre, entre lesquels est disposée une chambre de décharge (22) traversée par un courant laser (24) et dont au moins l'un des systèmes d'électrodes comporte un noyau métallique (40) maintenu sur le côté interne de la paroi du canal, ainsi qu'un corps de recouvrement (68) diélectrique emprisonnant celui-ci par le dessus et disposé en regard de la chambre de décharge, caractérisé en ce que le noyau métallique (40) et le corps de recouvrement (68) sont conçus afin qu'entre les systèmes d'électrodes (38) il puisse régner une intensité de champ conductrice décroissante en aval du courant de gaz laser (24) et à une densité de courant de décharge constante le long du courant de gaz laser (24).

2. Canal de décharge selon la revendication 1, caractérisé en ce que dans la zone située en aval du courant de gaz laser (24) le noyau métallique (40) présente une section transversale arrondie.

3. Canal de décharge selon la revendication 1 ou 2, caractérisé en ce que dans la direction en aval du courant de gaz laser (24) le corps de revêtement (68) présente une épaisseur croissante.

4. Canal de décharge selon l'une des revendications précédentes, caractérisé en ce que le corps de recouvrement (68) emprisonne complètement les surfaces (62, 66, 68) situées en aval et dirigées vers la chambre de décharge (22), du noyau métallique (40).

5. Canal de décharge selon l'une des revendications 2 à 4, caractérisé en ce que le corps de recouvrement (68) s'étend jusqu'à la paroi du canal (18, 20).

6. Canal de décharge selon l'une des revendications précédentes, caractérisé en ce que les espaces intermédiaires entre des faces dirigées l'une vers l'autre (62, 66, 88; 70, 72) du noyau métallique (40) et du corps de revêtement (68) sont remplis d'une masse ou pâte de liaison (74).

7. Canal de décharge selon la revendication 6, caractérisé en ce que la pâte de liaison (74) est déformable élastiquement ou plastiquement.

8. Canal de décharge selon la revendication 6 ou 7, caractérisé en ce que la pâte de liaison (74) présente de petites pertes diélectriques à haute fréquence.

9. Canal de décharge selon l'une des revendications 6 à 8, caractérisé en ce que la pâte de liaison (74) possède une bonne capacité de conduction thermique.

10. Canal de décharge selon l'une des revendications 6 à 9, caractérisé en ce que la pâte de liaison (74) est maintenue sur le noyau métallique (40).

11. Canal de décharge selon l'une des revendications 6 à 10, caractérisé en ce que le corps de recouvrement (68) est maintenu sur le noyau métallique (40) au moyen de la pâte de liaison (74).

12. Canal de décharge selon la revendication 11, caractérisé en ce que la pâte de liaison (74) renferme une substance adhésive au silicone.

13. Canal de décharge selon la revendication 11, caractérisé en ce que la pâte de liaison (74) renferme une substance collante à base de résine époxyde.

14. Canal de décharge selon l'une des revendications précédentes, caractérisé en ce que le noyau métallique (40) est enveloppé sur ses surfaces (60, 64) non recouvertes par le corps de revêtement (68) d'une masse de scellement (82).

15. Canal de décharge selon la revendication 14, caractérisé en ce que la masse de scellement (82) renferme du silicone.

16. Canal décharge selon l'une des revendications précédentes, caractérisé en ce que le noyau métallique (40) est muni de canaux de refroidissement (50, 52).

17. Canal de décharge selon la revendication 16, caractérisé en ce que les canaux de refroidissement (50, 52) s'étendent dans la direction longitudinale du noyau métallique (40).

18. Canal de décharge selon la revendication 17, caractérisé en ce qu'au niveau des côtés frontaux du noyau métallique (40) les canaux de refroidissement (50, 52) sont reliés par des canaux transversaux (58) décrivant des méandres.

19. Canal de décharge selon l'une des revendications précédentes, caractérisé en ce que le noyau métallique est doté d'une aile traversant la paroi du canal.

20. Canal de décharge selon la revendication 19, caractérisé en ce que l'aile (32) est disposée approximativement au centre longitudinal du noyau métallique (40).
